(19) Europäisches Patentamt
European Patent Office
Office européen des brevets

(11) **EP 3 234 542 B1**

(12) **FASCICULE DE BREVET EUROPEEN**

(45) Date de publication et mention de la délivrance du brevet:
**22.04.2020 Bulletin 2020/17**

(51) Int Cl.:
***G01M 17/02*** *(2006.01)*

(21) Numéro de dépôt: **15817124.9**

(22) Date de dépôt: **11.12.2015**

(86) Numéro de dépôt international:
**PCT/EP2015/079460**

(87) Numéro de publication internationale:
**WO 2016/096665 (23.06.2016 Gazette 2016/25)**

(54) **SYSTÈME D'ÉVALUATION DE L'ÉTAT D'UN PNEUMATIQUE MUNI D'UN DISPOSITIF DE DÉTECTION DU SENS DE ROULAGE**

SYSTEM ZUR BEWERTUNG DES ZUSTANDS EINES REIFENS MIT EINER VORRICHTUNG ZUR ERKENNUNG DER FAHRTRICHTUNG

SYSTEM FOR EVALUATING THE CONDITION OF A TYRE, EQUIPPED WITH A DEVICE FOR DETECTING THE DIRECTION OF TRAVEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462593**

(43) Date de publication de la demande:
**25.10.2017 Bulletin 2017/43**

(73) Titulaire: **Compagnie Générale des Etablissements Michelin**
**63000 Clermont-Ferrand (FR)**

(72) Inventeurs:
• **LEDOUX, Thomas**
  **63040 Clermont-Ferrand Cedex 9 (FR)**
• **MARTIN, Denis**
  **63040 Clermont-Ferrand Cedex 9 (FR)**
• **HEREDIA, Guillaume**
  **63040 Clermont-Ferrand Cedex 9 (FR)**
• **PERNOT, Alexandre**
  **63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2007/059935    DE-U1-202014 001 427**
**GB-A- 2 443 965**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

La présente invention est relative à un système d'évaluation de l'état d'un pneumatique selon la revendication 1. De manière plus précise, l'invention est relative à un tel système muni d'un dispositif de détection du sens de roulage d'un véhicule sur ce système d'évaluation.

Au sens de la présente invention, un système d'évaluation de l'état d'un pneumatique est par exemple, mais non limitativement, un système permettant de détecter l'usure d'un pneumatique, un système permettant de détecter la pression d'un pneumatique, ou par extension un système permettant de mesurer la vitesse d'un pneumatique.

Ainsi, l'invention concerne également un procédé de détection du sens de roulage d'un pneumatique sur un système selon l'invention. Elle concerne également un procédé de détection de la vitesse de passage d'un véhicule sur un système selon l'invention.

On connaît de nombreux systèmes permettant le diagnostic d'un véhicule. Pour l'usure, on peut ainsi citer des témoins d'usure présents sur les pneumatiques, ou des dispositifs manuels de mesure de la hauteur de gomme restante sur un pneumatique.

Concernant la mesure de pression, on peut citer des systèmes installés directement sur les roues des véhicules, qui déterminent la pression au moyen d'un capteur de pression et qui envoient ensuite l'information par radiofréquence jusqu'à l'électronique centrale du véhicule ; des systèmes débarqués permettant la mesure de pression de contact des pneumatiques au niveau du sol, ou bien encore des manomètres manuels.

La présente invention vise à fournir un système, notamment utilisable par des gestionnaires de flottes de véhicules, qui puisse s'inscrire dans un système plus global de diagnostic de l'état d'un véhicule et de ses pneumatiques. Or, aucun des systèmes connus ne permet, en l'état, un recoupement de différentes informations concernant le véhicule et ses pneumatiques.

On connait, du document US 2009/0000370, un système de mesure comprenant un banc de roulement destiné à accueillir le passage d'un véhicule. On a toutefois constaté que, pour des véhicules de gros gabarit, il était parfois nécessaire d'utiliser deux bancs de roulement distincts pour chacun des côtés des véhicules, et qu'un tel système ne permettait pas d'identifier, lors d'une mesure, le côté du véhicule concerné par ladite mesure.

La présente invention vise donc à remédier à cet inconvénient en proposant une amélioration des systèmes de diagnostic de véhicule existants.

BREVE DESCRIPTION DE L'INVENTION

Ainsi, l'invention propose un système d'évaluation de l'état d'un pneumatique, le système comprenant un premier boîtier posé au sol, ledit système comprenant

- un premier capteur, installé dans le boitier, et destiné à mesurer une première caractéristique d'un pneumatique passant sur le boitier,

- un second capteur, installé dans le boitier, et destiné à mesurer une seconde caractéristique d'un pneumatique passant sur le boitier

le premier et le second capteurs étant positionné de façon telle que les instants de passage d'un véhicule roulant sur le boitier au niveau de chacun des capteurs sont distincts,
et le système comportant en outre une électronique de pilotage comprenant des moyens de détermination d'un sens de roulage du véhicule sur le boitier en fonction des positionnements de chacun des capteurs dans le boitier et des instants de passage d'un véhicule sur chacun des capteurs.

Un tel système permet ainsi de mesurer différentes caractéristiques d'un pneumatique en un seul passage, et permet également de détecter le sens de roulage du véhicule sur le système lors de ce passage.

Dans une réalisation avantageuse, les premier et second capteurs sont positionnés dans le boitier de façon à ce que la projection de leur position sur la face supérieure plane du boitier définisse une ligne non orthogonale à la direction de roulage d'un véhicule sur le boitier.

Dans une réalisation avantageuse, le premier et/ou le second capteur sont compris dans le groupe comprenant : un capteur d'usure à courant de Foucault, un capteur d'usure à reluctance variable, un capteur d'usure optique à base de laser, un capteur de pression ou de charge locale.

Dans une réalisation avantageuse, le système comprend en outre un dispositif de détection de présence de pneumatique installé dans le boitier. De manière préférentielle, ce dispositif de détection de présence utilise une unique entrée sur l'électronique de pilotage du système.

Dans une réalisation avantageuse le dispositif de détection de présence comprend un élément sensible compris dans le groupe comprenant : un accéléromètre ou tout type de capteur sensible aux vibrations ou aux chocs, un magnétomètre ou tout type de capteur sensible à la variation de champ magnétique terrestre, un extensomètre à fils résistants, également appelés jauges de contrainte ou jauges de déformations, un buzzer piezoélectrique ou tout système utilisant un matériau ou un composite piezoélectrique tel une peinture piézo-électrique.

Alternativement, le dispositif de détection de présence de pneumatique peut-être constitué d'une cavité étanche accueillant un fluide et d'un capteur de pression installé de manière à mesurer la pression du fluide dans cette cavité. L'arrivée d'un pneumatique sur le boitier provoque une augmentation de pression du fluide dans la cavité, détectée par le capteur de pression. Ce signal peut ensuite être utilisé comme indicateur de la présence d'un véhicule sur le boitier. Dans un autre exemple, il est possible d'utiliser un détecteur de contact mécanique, mettant en œuvre une lame souple. Ce détecteur de contact est positionné à une extrémité de la cavité, et soumis à un mouvement du fluide lors d'une augmentation de la pression dans la cavité. Ce détecteur se ferme électriquement lorsqu'un véhicule est présent sur le boitier.

Dans une réalisation avantageuse, le système comprend un premier groupe de capteurs du même type que le premier capteur, et un second groupe de capteurs du même type que le second capteur, les capteurs du premier groupe étant positionnés de façon à ce que leurs projections orthogonales sur la surface supérieure plane du boitier forment une première ligne, et les capteurs du second groupe étant positionnés de façon à ce que leurs projections orthogonales sur la surface supérieure plane du boitier forment une second ligne, et les première et second lignes étant distinctes, et orientée dans une direction non parallèle au sens de roulage d'un véhicule sur le boitier. Préférentiellement, les deux lignes sont orthogonales à la direction de roulage d'un véhicule sur le boitier.

L'utilisation d'un nombre de capteurs plus élevés permet de garantir que les mesures soient effectuées lors du passage d'un véhicule sur un boitier, et ce quel que soit la taille des pneumatiques du véhicule. En effet, en positionnant plusieurs capteurs sur la largeur du boitier, on garantit que tout pneumatique passant sur le boitier passera au moins au-dessus d'un capteur du premier groupe et d'un capteur du second groupe. On choisira donc avantageusement le nombre de capteurs en fonction des dimensions du boitier et des dimensions des pneumatiques envisagés.

Ces capteurs seront préférablement positionnés en quinconce. Par quinconce, on entend une position selon laquelle les projections orthogonales des capteurs du premier groupe sont régulièrement répartis sur une première ligne, les projections orthogonales des capteurs du second groupe sont régulièrement répartis sur une seconde ligne, et les éléments de la seconde ligne sont décalés d'un demi-pas par rapport aux éléments de la première ligne, un pas correspondant à l'écart entre deux éléments de la première ligne. Ce positionnement en quinconce participe de l'efficacité du système de mesure tel qu'explicité au paragraphe précédent.

Dans une réalisation avantageuse, le système comprend un second boitier identique au premier, les premier et second boitiers étant positionnés de façon telle que lors du passage d'un véhicule, les pneumatiques situés d'un premier côté du véhicule roulent sur le premier boitier, et les pneumatiques situés sur un second côté du véhicule roulent sur le second boitier.

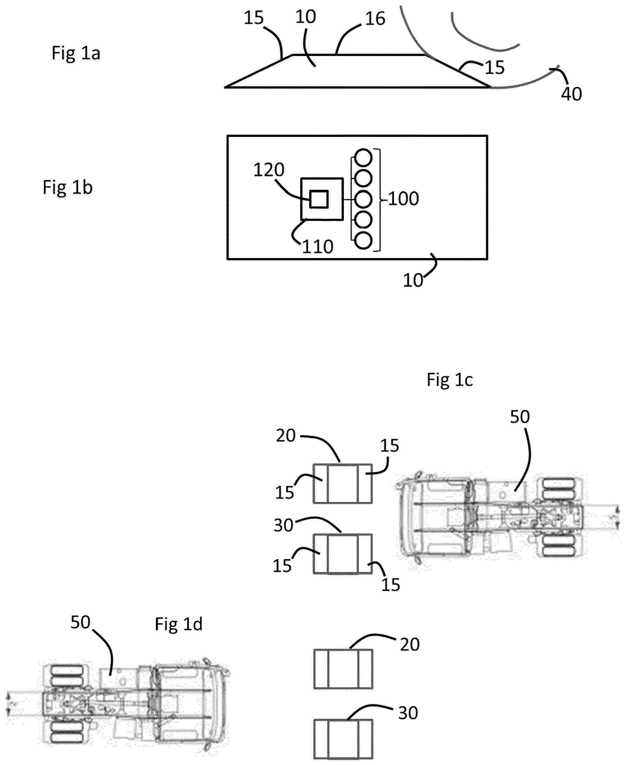

L'utilisation d'un tel système muni de deux boitiers est particulièrement avantageux pour l'évaluation de pneumatiques installés sur des véhicules de gros gabarits, par exemple des poids lourds. Ce cas de figure sera ultérieurement décrit en détail à l'aide des figures, notamment des figures 1c et 1d.

L'invention concerne également un procédé de détermination du sens de roulage d'un véhicule sur un système d'évaluation de l'état d'un pneumatique selon l'invention. Ce procédé comprend les étapes suivantes :

- Une étape de détection du franchissement d'un premier seuil de tension par le premier capteur,

- Une étape de détection du franchissement d'un second seuil de tension par le second capteur,

- Une étape de détermination du sens de roulage en fonction du positionnement des deux capteurs et de la chronologie des deux franchissements précédemment détectés.

Ce procédé trouve une application particulièrement avantageuse dans le cas, précédemment évoqué, d'un système d'évaluation comportant deux boitiers. Ce cas d'application sera ultérieurement détaillé à l'aide de figures.

L'invention concerne également un procédé de mesure de la vitesse d'un pneumatique roulant un système d'évaluation selon l'invention. Ce procédé comprend les étapes suivantes :

- une étape de détection du franchissement d'un premier seuil de tension par le premier capteur,

- une étape de détection du franchissement d'un second seuil de tension par le second capteur, et

- une étape de calcul de la vitesse du véhicule en divisant la distance entre les projections orthogonales des positions de chacun des capteurs sur la face supérieure plane du boitier par le temps écoulé entre les deux franchissements précédemment détectés.

Dans une réalisation avantageuse, la distance entre les projections orthogonales est enregistrée dans une mémoire reliée à l'électronique de pilotage du système.

Dans une autre réalisation avantageuse, le système selon l'invention est muni de moyens de communication radiofréquence permettant la transmission des données mesurées à un serveur distant. Dans ce cas, la distance entre les projections orthogonales peut être enregistrée dans une base de données installée sur un serveur distant, et le calcul de la vitesse peut être effectué par des moyens de calcul associés à ladite base de données.

## DESCRIPTION DU MEILLEUR MODE DE REALISATION DE L'INVENTION

D'autres avantages et modes de réalisation de l'invention apparaîtront avec la description détaillée des figures, effectuée à titre non limitatif, dans lesquels :

- Les figures la, 1b, 1c et 1d montrent un système d'évaluation présentant les inconvénients de l'état de la technique, et

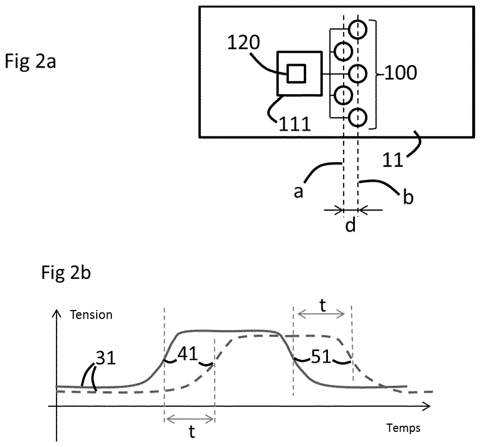

- Les figures 2a et 2b montrent un système d'évaluation selon l'invention.

Les figures 1c et 1d montrent un système d'évaluation selon l'état de la technique, comprenant deux boitiers 20 et 30. Ces deux boitiers, identiques, sont positionnés de façon à ce que lorsqu'un véhicule passe sur le système, les pneumatiques installés sur un premier côté du véhicule roulent sur un des deux boitiers, et les pneumatiques installés sur l'autre côté du véhicule roulent sur l'autre boitier:

Chacun des boitiers est identique au boitier 10 montré en figures la et 1b. Un tel boitier est constitué de deux rampes d'accès 15 et d'une zone de mesure de l'usure horizontale 16 situé entre les deux rampes d'accès 15.

Il comprend en outre :

- une ligne de capteurs 100, par exemple des capteurs d'usure, positionnés le long d'une ligne transversale au sens du roulage du véhicule arrivant sur le boitier 10. Ces capteurs de mesure de l'usure peuvent être de façon indifférente des capteurs à reluctance variable, des capteurs à courants de Foucault ou des capteurs optiques à base de lasers.

- D'une électronique de traitement 110 sur laquelle sont connectés les capteurs de mesure 100. Dans cet exemple, l'électronique de traitement 110 contient également un lecteur de RFID permettant la lecture des puces RFID intégrées dans les pneumatiques ou collées sur le véhicule dont l'usure des pneumatiques est mesurée, ainsi que des moyens de transmission radio fréquence permettant l'envoi des données dans une base de données distante.

En outre, l'électronique 110 est équipée d'un dispositif 120 de détection de présence de pneumatique 40 permettant d'activer le système de mesure uniquement au moment ou un pneumatique 40 se présente sur le système. Dans le cas exposé dans cet exemple, le dispositif 120 de détection de présence de pneumatique est constitué d'un unique capteur sensible, par exemple, aux vibrations ou ondes de chocs se propageant dans la structure du boitier 10 lors de l'arrivée d'un pneumatique 40 sur ledit boitier.

Dans une variante de réalisation des boitiers 20 et 30, ce capteur de détection de présence d'un pneumatique est un capteur sensible à la variation du champ magnétique terrestre lors de l'arrivée d'un véhicule sur le système de mesure.

En tout état de cause, dans l'exemple des figures la, 1b, le et 1d, le dispositif de détection de présence de pneumatique 120 ne donne pas une information permettant de déterminer le sens de roulage du pneumatique qui arrive sur le système de mesure.

Ainsi, dans le cas de la figure 1c, le véhicule 50 arrive sur les deux boitiers 20 et 30 par la droite. Dans ce cas, les pneumatiques situés du côté gauche du véhicule 50 seront vus par le boiter 30 et les pneumatiques situés sur le côté droit du véhicule 50 seront vus par le boitier 20.

A l'inverse, dans le cas de la figure 1d, le véhicule 50 arrive sur les deux boitiers 20 et 30 par la gauche. Dans ce cas, les pneumatiques situés du côté gauche du véhicule 50 seront vus par le boitier 20 et les pneumatiques situés sur le côté droit du véhicule 50 seront vus par le boitier 30.

Dans ce cas, le système ne connaissant pas le sens de roulage du véhicule, il ne sera pas à même de déterminer à quel côté du véhicule appartiennent les pneumatiques mesurés par les deux boitiers 20 et 30. Il ne sera donc pas possible de préciser le coté du véhicule sur lequel une éventuelle opération de maintenance doit être programmée, par exemple, pour cause d'usure trop importante.

La figure 2a montre un mode de réalisation de l'invention permettant de remédier à ce problème. Dans cet exemple, la ligne transversale de capteurs 100, par exemple des capteurs d'usure, est dédoublée de sorte que deux lignes transversales a et b soient réalisées. Ces deux lignes a et b sont également constituées de capteur de mesure de l'usure 100. Dans cet exemple, le nombre total de capteurs disposés le long de ces deux lignes a et b est identique au nombre de capteurs qui étaient disposés le long de l'unique ligne transversale de capteur 100 exposée dans le cas de la figure 1b, et les capteurs sont disposés en quinconce.

Si l'on imagine que les boitiers 20 et 30 de la figure 1d sont conformes mode de réalisation de l'invention décrit dans la figure 2a, si un véhicule se présente par la droite sur le système de mesure 11 ainsi réalisé, les capteurs de mesure 100 situés sur la ligne b pourront commencer à réaliser une mesure avant les capteurs situés sur la ligne a.

Inversement, si un véhicule se présente par la gauche du système de mesure 11, les capteurs de mesure 100 situés sur la ligne a pourront commencer à réaliser une mesure avant les capteurs situés sur la ligne b.

En outre, dans cet exemple, l'électronique de traitement 111 comprend des moyens pour déterminer le temps écoulé entre le début de la mesure sur l'une quelconque des deux lignes de capteurs et le début de la mesure sur l'autre ligne de capteurs.

La distance entre la ligne a et la ligne b étant connue, il est également possible de mesurer la vitesse du pneumatique en utilisant le temps écoulé entre le début de la mesure par la ligne b et le début de la mesure par la ligne a. Le cas échéant, il suffit d'appliquer la formule :

$$V=d/t$$

dans laquelle V est la vitesse du pneumatique dont l'usure est mesurée, d est la distance entre les deux lignes de capteurs a et b et t est le temps écoulé entre le début de la mesure par l'une quelconque des lignes de capteurs et le début de la mesure par l'autre ligne de capteurs.

Alternativement, il est possible de déterminer le temps t en mesurant le temps écoulé entre la fin de la mesure par l'une des lignes de capteurs et la fin de la mesure par l'autre ligne de capteurs.

La figure 2b montre l'évolution de la tension de sortie 31 de deux capteurs de mesure d'usure 100 appartenant l'un à la ligne de capteur a et l'autre à la ligne de capteur b d'un système selon l'invention. Le signal de sortie en trait continu est celui d'un capteur situé sur la ligne a et le signal de sortie en pointillés et celui d'un capteur situé sur la ligne b. Préférentiellement, les deux signaux de sortie 31 sont issus de deux capteurs adjacents. Par capteurs adjacents on entend un capteur situé sur une première ligne et l'un des deux capteurs les plus proches situés sur l'autre ligne.

L'électronique 111 est munie d'une électronique à seuil permettant de détecter le franchissement, par le signal, d'un seuil de tension repéré aux positions 41 et 51 sur les signaux 31. Il est donc possible de repérer le sens de roulage en observant l'ordre dans lequel les signaux de sortie de capteurs 100, adjacents et situés chacun sur deux lignes différentes, franchissent le seuil 41.

Alternativement, il est possible d'utiliser le seuil 51, correspondant au moment où le pneumatique dont l'usure est mesurée quitte la zone de mesure située sur le boitier 11, pour aboutir à la même conclusion.

Dans le cas de la figure 2b, on peut donc conclure que ces signaux ont été obtenus avec un véhicule arrivant par la gauche sur le système de mesure de l'usure 11, car le capteur de la ligne a est activé avant le capteur situé sur la ligne b.

En outre, le temps t écoulé entre le passage du signal en trait continu par le seuil 41, ou 51, et le passage du signal en pointillé par le même seuil 41, ou 51, correspond au temps nécessaire pour que le pneumatique passe de la ligne de capteur a à la ligne de capteur b.

Comme expliqué précédemment, l'écart entre les deux lignes a et b étant connu, c'est ce temps t qui devra être utilisé pour mesurer la vitesse de passage du véhicule sur le système.

**Revendications**

1. Système d'évaluation de l'état d'un pneumatique, le système comprenant un premier boîtier posé au sol, ledit système comprenant

   - un premier capteur, installé dans le boitier, et destiné à mesurer une première caractéristique d'un pneumatique passant sur le boitier,
   - un second capteur, installé dans le boitier, et destiné à mesurer une seconde caractéristique d'un pneumatique passant sur le boitier le premier et le second capteurs étant positionnés de façon telle que les instants de passage d'un véhicule roulant sur le boitier au niveau de chacun des capteurs sont distincts,

   **caractérisé en ce que** le système comportant en outre une électronique de pilotage comprenant des moyens de détermination d'un sens de roulage du véhicule sur le boitier en fonction des positionnements de chacun des capteurs dans le boitier et des instants de passage d'un véhicule sur chacun des capteurs.

2. Système d'évaluation de l'état d'un pneumatique selon la revendication 1, dans lequel les premier et second capteurs sont positionnés dans le boitier de façon à ce que la projection de leur position sur la face supérieure plane du boitier définisse une ligne non orthogonale à la direction de roulage d'un véhicule sur le boitier.

3. Système d'évaluation selon la revendication 1 ou 2, dans lequel le premier et/ou le second capteur sont compris dans le groupe comprenant : un capteur d'usure à courant de Foucault, un capteur d'usure à reluctance variable, un capteur d'usure optique à base de laser, un capteur de pression, un capteur de charge locale.

4. Système d'évaluation de l'état d'un pneumatique selon l'une des revendications précédentes, comprenant en outre un dispositif de détection de présence de pneumatique installé dans le boitier.

5. Système d'évaluation selon la revendication 4, dans lequel le dispositif de détection de présence utilise une unique entrée sur l'électronique de pilotage du système.

6. Système d'évaluation selon l'une des revendications précédentes, dans lequel le dispositif de détection de présence comprend un élément sensible compris dans le groupe comprenant : un accéléromètre ou tout type de capteur sensible aux vibrations ou aux chocs, un magnétomètre ou tout type de capteur sensible à la variation de champ magnétique terrestre, un extensomètre à fils résistants, un buzzer piezoélectrique ou tout système utilisant un composite piezoélectrique tel une peinture piezo-électrique.

7. Système d'évaluation selon l'une des revendications précédentes, dans lequel le dispositif de détection de présence est constitué d'une cavité remplie d'un fluide, et d'un capteur de pression ou d'un détecteur de contact mécanique, mettant en œuvre une lame souple.

8. Système d'évaluation selon l'une des revendications précédentes, comprenant un premier groupe de capteurs du même type que le premier capteur, et un second groupe de capteurs du même type que le second capteur, les capteurs du premier groupe étant positionnés de façon à ce que leurs projections orthogonales sur la surface supérieure plane du boitier forment une première ligne, et les capteurs du second groupe étant positionnés de façon à ce que leurs projections orthogonales sur la surface supérieure plane du boitier forment une second ligne, et les première et second lignes étant distinctes et orientées dans une direction non parallèle au sens de roulage d'un véhicule sur le boitier

9. Système d'évaluation selon la revendication 8, dans laquelle l'orientation des deux lignes distinctes est orthogonale à la direction de roulage d'un véhicule sur le boitier.

10. Système d'évaluation selon la revendication 8 ou 9, dans lequel les capteurs du premier et du second groupe sont positionnés en quinconce.

11. Système d'évaluation selon l'une des revendications précédentes, comprenant un second boitier identique au premier, les premier et second boitiers étant positionnés de façon telle que lors du passage d'un véhicule, les pneumatiques situés d'un premier côté du véhicule roulent sur le premier boitier, et les pneumatiques situés sur un second côté du véhicule roulent sur le second boitier.

12. Procédé de détermination du sens de roulage d'un véhicule sur un système d'évaluation de l'état d'un pneumatique selon l'une des revendications précédentes, ledit procédé comprenant les étapes suivantes :

    - Une étape de détection du franchissement d'un premier seuil de tension par le premier capteur,
    - Une étape de détection du franchissement d'un second seuil de tension par le second capteur,
    - Une étape de détermination du sens de roulage en fonction du positionnement des deux capteurs et de la chronologie des deux franchissements précédemment détectés.

13. Procédé de mesure de la vitesse d'un pneumatique roulant sur un système d'évaluation de l'état d'un pneumatique selon l'une des revendications 1 à 11, le procédé comprenant les étapes suivantes :

    - Une étape de détection du franchissement d'un premier seuil de tension par le premier capteur,
    - Une étape de détection du franchissement d'un second seuil de tension par le second capteur, et
    - Une étape de calcul de la vitesse du véhicule en divisant la distance entre les projections orthogonales des positions de chacun des capteurs sur la face supérieure plane du boitier par le temps écoulé entre les deux franchissements précédemment détectés.

14. Procédé de mesure de vitesse selon la revendication 13 dans lequel la distance entre les projections orthogonales est enregistrée dans une mémoire reliée à l'électronique de pilotage du système.

15. Procédé de mesure de vitesse selon la revendication 13 dans lequel la distance entre les projections orthogonales est enregistrée dans une base données installée sur un serveur distant, et le calcul de la vitesse est réalisé par des moyens de calcul associés à la base de données.

**Patentansprüche**

1. System zum Bewerten des Zustands eines Reifens, wobei das System ein erstes Gehäuse aufweist, das auf dem Boden angeordnet ist, wobei das System Folgendes aufweist:

    - einen ersten Sensor, der in dem Gehäuse installiert ist und dazu bestimmt ist, eine erste Charakteristik eines Reifens zu messen, der über das Gehäuse läuft,
    - einen zweiten Sensor, der in dem Gehäuse installiert ist und dazu bestimmt ist, eine zweite Charakteristik eines Reifens zu messen, der über das Gehäuse läuft,

wobei der erste und der zweite Sensor so positioniert sind, dass die Zeitpunkte des Überfahrens durch ein Fahrzeug, das in Höhe jedes Sensors über das Gehäuse rollt, unterschiedlich sind, **dadurch gekennzeichnet, dass** das System darüber hinaus eine Steuerelektronik enthält, die Mittel zum Bestimmen einer Fahrtrichtung des Fahrzeugs auf dem Gehäuse in Abhängigkeit von der Positionierung jedes Sensors in dem Gehäuse und den Zeitpunkten des Überfahrens jedes Sensors durch ein Fahrzeug aufweist.

**2.** System zum Bewerten des Zustands eines Reifens nach Anspruch 1, wobei der erste und der zweite Sensor so in dem Gehäuse positioniert sind, dass die Projektion ihrer Position auf die flache Oberseite des Gehäuses eine Linie definiert, die nicht orthogonal zur Fahrtrichtung eines Fahrzeugs auf dem Gehäuse verläuft.

**3.** System zum Bewerten nach Anspruch 1 oder 2, wobei der erste und/oder der zweite Sensor zu der Gruppe gehören, die Folgendes aufweist: einen Wirbelstrom-Verschleißsensor, einen Verschleißsensor mit variabler Reluktanz, einen optischen Laser-Verschleißsensor, einen Drucksensor, einen Sensor für lokale Belastung.

**4.** System zum Bewerten des Zustands eines Reifens nach einem der vorausgehenden Ansprüche, das darüber hinaus eine in dem Gehäuse installierte Vorrichtung zum Erkennen des Vorhandenseins eines Reifens aufweist.

**5.** System zum Bewerten nach Anspruch 4, wobei die Vorrichtung zum Erkennen des Vorhandenseins einen einzigen Eingang zur Steuerelektronik des Systems aufweist.

**6.** System zum Bewerten nach einem der vorausgehenden Ansprüche, wobei die Vorrichtung zum Erkennen des Vorhandenseins ein Sensorelement aufweist, das zu der Gruppe gehört, die Folgendes aufweist: einen Beschleunigungsmesser oder eine beliebige Art von Sensor, der auf Vibrationen oder Stöße reagiert, einen Magnetometer oder eine beliebige Art von Sensor, der auf die Änderung des Erdmagnetfelds reagiert, einen Ausdehnungsmesser mit Widerstandsdrähten, ein piezoelektrischer Summer oder ein beliebiges System, das einen piezoelektrischen Verbundwerkstoff wie eine piezoelektrische Farbe verwendet.

**7.** System zum Bewerten nach einem der vorausgehenden Ansprüche, wobei die Vorrichtung zum Erkennen des Vorhandenseins aus einem mit einem Fluid gefüllten Hohlraum und einem Drucksensor oder einem mechanischen Kontaktdetektor besteht, der eine flexible Klinge verwendet.

**8.** System zum Bewerten nach einem der vorausgehenden Ansprüche, das eine erste Gruppe von Sensoren des gleichen Typs wie der erste Sensor und eine zweite Gruppe von Sensoren des gleichen Typs wie der zweite Sensor aufweist, wobei die Sensoren der ersten Gruppe so positioniert sind dass ihre orthogonalen Projektionen auf die flache Oberseite des Gehäuses eine erste Linie bilden und die Sensoren der zweiten Gruppe so positioniert sind, dass ihre orthogonalen Projektionen auf die flache Oberseite des Gehäuses eine zweite Linie bilden, und die erste und die zweite Linie unterschiedlich sind und in einer Richtung ausgerichtet sind, die nicht parallel zur Fahrtrichtung eines Fahrzeugs auf dem Gehäuse ist.

**9.** System zum Bewerten nach Anspruch 8, wobei die Ausrichtung der zwei unterschiedlichen Linien orthogonal zur Fahrtrichtung eines Fahrzeugs auf dem Gehäuse verläuft.

**10.** System zum Bewerten nach Anspruch 8 oder 9, wobei die Sensoren der ersten und der zweiten Gruppe gegeneinander versetzt positioniert sind.

**11.** System zum Bewerten nach einem der vorausgehenden Ansprüche, das ein zweites Gehäuse aufweist, das mit dem ersten identisch ist, wobei das erste und das zweite Gehäuse so positioniert sind, dass beim Überfahren durch ein Fahrzeug die Reifen, die sich auf einer ersten Seite des Fahrzeugs befinden, über das erste Gehäuse rollen, und die Reifen, die sich auf einer zweiten Seite des Fahrzeugs befinden, über das zweite Gehäuse rollen.

**12.** Verfahren zum Bestimmen der Fahrtrichtung eines Fahrzeugs auf einem System zur Bewertung des Zustands eines Reifens nach einem der vorausgehenden Ansprüche, wobei das Verfahren die folgenden Schritte aufweist:

- einen Schritt zum Erkennen des Überschreitens einer ersten Spannungsschwelle durch den ersten Sensor,
- einen Schritt zum Erkennen des Überschreitens einer zweiten Spannungsschwelle durch den zweiten Sensor,
- einen Schritt zum Bestimmen der Fahrtrichtung in Abhängigkeit von der Positionierung der zwei Sensoren und der Chronologie der zwei vorher erkannten Überschreitungen.

**13.** Verfahren zum Messen der Geschwindigkeit eines über ein System zur Bewertung des Zustands eines Reifens rollenden Reifens nach einem der Ansprüche 1 bis 11, wobei das Verfahren die folgenden Schritte aufweist:

- einen Schritt zum Erkennen des Überschreitens einer ersten Spannungsschwelle durch den ersten Sensor,
- einen Schritt zum Erkennen des Überschreitens einer zweiten Spannungsschwelle durch den zweiten Sensor, und
- einen Schritt zum Berechnen der Geschwindigkeit des Fahrzeugs durch Teilen des Abstands zwischen den orthogonalen Projektionen der Positionen jedes Sensors auf die flache Oberseite des Gehäuses durch die Zeit, die zwischen den zwei vorher erkannten Überschreitungen verstrichen ist.

14. Verfahren zum Messen einer Geschwindigkeit nach Anspruch 13, wobei der Abstand zwischen den orthogonalen Positionen in einem mit der Steuerelektronik des Systems verbundenen Speicher aufgezeichnet wird.

15. Verfahren zum Messen einer Geschwindigkeit nach Anspruch 13, wobei der Abstand zwischen den orthogonalen Projektionen in einer auf einem entfernten Server installierten Datenbank aufgezeichnet wird und die Berechnung der Geschwindigkeit durch Berechnungsmittel durchgeführt wird, die der Datenbank zugeordnet sind.

**Claims**

1. System for evaluating the state of a tyre, the system comprising a first housing laid on the ground, the said system comprising

   - a first sensor, installed in the housing, and intended to measure a first characteristic of a tyre passing over the housing,
   - a second sensor, installed in the housing, and intended to measure a second characteristic of a tyre passing over the housing

   the first and the second sensors being positioned in such a way that the instants of passage of a vehicle rolling over the housing at the level of each of the sensors are distinct,
   **characterised in that**
   the system furthermore comprising control electronics comprising means for determining a direction of rolling of the vehicle over the housing as a function of the positionings of each of the sensors in the housing and of the instants of passage of a vehicle over each of the sensors.

2. System for evaluating the state of a tyre according to Claim 1, in which the first and second sensors are positioned in the housing in such a way that the projection of their position on the plane upper face of the housing defines a line non-orthogonal to the direction of rolling of a vehicle over the housing.

3. System for evaluating the state of a tyre according to Claim 1 or 2, in which the first and/or the second sensor are included in the group comprising: an eddy-current-based wear sensor, a variable-reluctance wear sensor, a laser-based optical wear sensor, a pressure sensor, a local load sensor.

4. System for evaluating the state of a tyre according to one of the preceding claims, furthermore comprising a tyre presence detection device installed in the housing.

5. System for evaluating according to Claim 4, in which the presence detection device uses a single input on the system control electronics.

6. System for evaluating the state of a tyre according to one of the preceding claims, in which the presence detection device comprises a sensitive element included in the group comprising: an accelerometer or any type of sensor sensitive to vibrations or to shocks, a magnetometer or any type of sensor sensitive to terrestrial magnetic field variation, a resistance wire extensometer, a piezoelectric buzzer or any system using a piezoelectric composite such as a piezo-electrical paint.

7. System for evaluating the state of a tyre according to one of the preceding claims, in which the presence detection device consists of a cavity filled with a fluid, and of a pressure sensor or of a mechanical contact detector, implementing a flexible plate.

8. System for evaluating the state of a tyre according to one of the preceding claims, comprising a first group of sensors of the same type as the first sensor, and a second group of sensors of the same type as the second sensor, the sensors of the first group being positioned in such a way that their orthogonal projections on the plane upper surface of the housing form a first line, and the sensors of the second group being positioned in such a way that their orthogonal projections on the plane upper surface of the housing form a second line, and the first and second lines being distinct and oriented in a direction not parallel to the direction of rolling of a vehicle over the housing

9. System for evaluating the state of a tyre according to Claim 8, in which the orientation of the two distinct lines is orthogonal to the direction of rolling of a vehicle over the housing.

10. System for evaluating the state of a tyre according to Claim 8 or 9, in which the sensors of the first and of the second group are positioned quincuncially.

11. System for evaluating the state of a tyre according to one of the preceding claims, comprising a second housing identical to the first, the first and second housings being positioned in such a way that during the passage of a vehicle, the tyres situated on a first side of the vehicle roll over the first housing, and the tyres situated on a second side of the vehicle roll over the second housing.

**12.** Method for determining the direction of rolling of a vehicle over a system for evaluating the state of a tyre according to one of the preceding claims, the said method comprising the following steps:

> - A step of detecting the crossing of a first voltage threshold by the first sensor,
> - A step of detecting the crossing of a second voltage threshold by the second sensor,
> - A step of determining the direction of rolling as a function of the positioning of the two sensors and of the chronology of the two previously detected crossings.

**13.** Method for measuring the speed of a tyre rolling over a system for evaluating the state of a tyre according to one of Claims 1 to 11, the method comprising the following steps:

> - A step of detecting the crossing of a first voltage threshold by the first sensor,
> - A step of detecting the crossing of a second voltage threshold by the second sensor, and
> - A step of calculating the speed of the vehicle by dividing the distance between the orthogonal projections of the positions of each of the sensors on the plane upper face of the housing by the time elapsed between the two previously detected crossings.

**14.** Method for measuring speed according to Claim 13 in which the distance between the orthogonal projections is recorded in a memory linked to the system control electronics.

**15.** Method for measuring speed according to Claim 13 in which the distance between the orthogonal projections is recorded in a database installed on a remote server, and the calculation of the speed is carried out by calculation means associated with the database.

Fig 1a

15 10 16

15

40

Fig 1b

120

110

100

10

Fig 1c

20

15

15

30

15

15

50

Fig 1d

50

20

30

Fig 2a

Fig 2b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090000370 A